# EUROPEAN PATENT SPECIFICATION

(11) **EP 3 369 945 B1**
(45) Date of publication and mention of the grant of the patent: **01.12.2021**
(21) Application number: 18158033.3
(22) Date of filing: 22.02.2018
(51) Int. Cl.: F16B 5/02, E03D 11/14, F16B 37/08, F16B 21/02

(54) **CONVENIENTLY-MOUNTED WALL SUPPORT ASSEMBLY**
KOMFORTABEL MONTIERTE WANDSTÜTZANORDNUNG
ENSEMBLE DE SUPPORT MURAL MONTÉ DE MANIÈRE PRATIQUE

(30) Priority: 01.03.2017 CN 201710117123
(43) Date of publication of application: 05.09.2018
(73) Proprietor: ECO (XIAMEN) TECHNOLOGY INC., Xiamen City, Fujian Province 361000 (CN)
(72) Inventor: CHI, Shang Fei, Xiamen, Fujian (CN); GAN, Jia Sheng, Xiamen, Fujian (CN); YAN, Kai Lang, Baisha Town, Fujian (CN); WEI, Wu, Xiamen, Fujian (CN)
(74) Representative: Verscht, Thomas Kurt Albert

(56) References cited:
- EP-A1- 1 750 021
- EP-A2- 1 260 639
- EP-A2- 2 752 526
- US-A- 2 463 179

## Description

### BACKGROUND OF THE INVENTION

### Technical Field

The invention relates to a conveniently-mounted wall support assembly.

### Description of Related Art

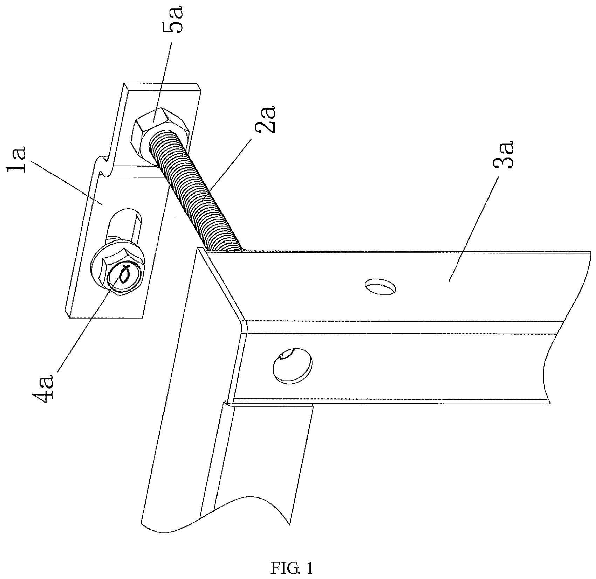

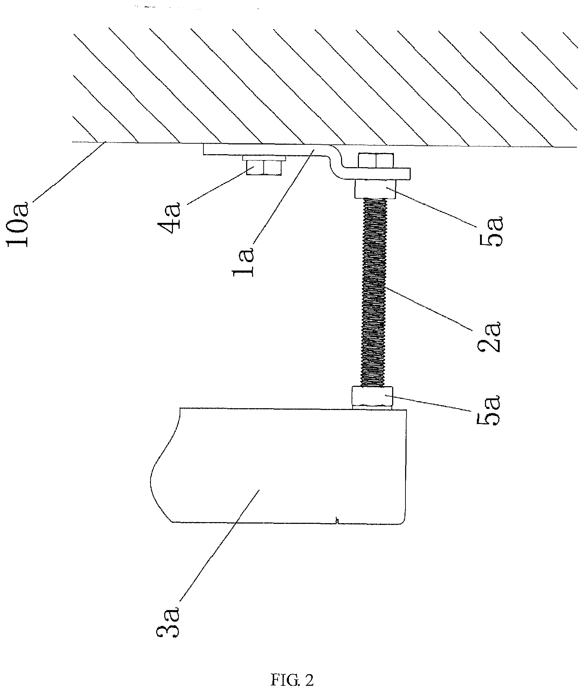

Nowadays, many bathroom devices need to be mounted on walls through support devices. As is shown in FIG. 1 and FIG. 2, a common support device comprises a bent support plate 1a, a screw 2a and a bracket 3a, wherein one end of the support plate 1a is fixed to a wall 10a through a bolt 4a, the other end of the support plate 1a is fixedly connected with one end of the screw 2a through a nut 5a, the other end of the screw 2a is fixedly connected with the bracket 3a through a nut 5a, and then a bathroom device is fixedly connected to the bracket 3a. However, the support device cannot be mounted easily, the distance between the bracket 3a and the wall 10a is difficult to adjust, consequentially, the bathroom device cannot be mounted conveniently, and the mounting cost of the bathroom device can be increased. An adjustable fastening device, in particular for wall-mounting a sanitary fixture installation structure, is known from EP 1 750 021 A1.

### BRIEF SUMMARY OF THE INVENTION

The invention provides a wall support assembly according to claim 1 which is convenient to mount, can be mounted and dismounted rapidly and can reduce the mounting cost.

According to the technical scheme adopted by the invention for achieving the above aim: a conveniently-mounted wall support assembly comprises a screw and a support fixedly connected to a wall, wherein a matching hole allowing one end of the screw to be inserted therein is formed in the support, radial through holes are formed in the inner side face of the matching hole, and clamping blocks are mounted in the radial through holes; the support is sleeved with a rotating sleeve, and driving surfaces and receding grooves are arranged on the inner surface of the rotating sleeve; after one end of the screw is inserted into the matching hole, the clamping blocks are driven by the driving surfaces to move towards the screw so as to tightly clamp the screw when the rotating sleeve is rotated to enable the driving surfaces to be matched with the clamping blocks, and the clamping blocks can be separated from the screw when the rotating sleeve is rotated to enable the receding grooves to be matched with the clamping blocks.

Preferably, the matching hole is perpendicular to the wall in the axial direction, two radial through holes are symmetrically formed in the inner side face of the matching hole, a clamping block is mounted in each radial through hole, two driving surfaces and two receding grooves are symmetrically arranged on the inner surface of the rotating sleeve, and thus the clamping reliability of the screw can be improved.

As a further improvement, a plurality of thread matching grooves matched with external threads of the screw are formed in the side, close to the matching hole, of each clamping block, the thread matching grooves in the clamping blocks are matched with the external threads of the screw when the camping blocks are driven by the driving surfaces to move towards the screw, in this way, the position of the screw can be finely adjusted conveniently, and a bathroom device or other devices can be mounted more conveniently.

Preferably, a cylinder is arranged on the support, the matching hole is formed in the middle of the cylinder, the radial through holes are formed in the cylinder, and the outer circumferential surface of the cylinder is sleeved with the rotating sleeve.

As a further improvement, a groove is distributed in the outer circumferential surface of the cylinder in the circumferential direction, a notch is formed in the outer end of the rotating sleeve, a deformable plate extends out from the bottom of the notch in the axial direction of the rotating sleeve, a first protrusion extends out from the inner side face of the plate in the radial direction of the rotating sleeve, the first protrusion is matched with the groove, and thus the rotating angle of the rotating sleeve can be well controlled.

As a further improvement, a second protrusion is arranged at the outer end of the cylinder, an axial through groove is formed in the inner surface of the rotating sleeve, the rotating sleeve can penetrate through the second protrusion to be arranged on the outer circumferential surface of the cylinder in a sleeving mode through the axial through groove, and when the rotating sleeve is arranged on the outer circumferential surface of the cylinder in the sleeving mode, the second protrusion prevents the rotating sleeve from being separated from the cylinder except at the position of the axial through groove.

As a further improvement, a locking mark and an unlocking mark are arranged on the outer end face of the rotating sleeve, and the unlocking mark is close to the axial through groove; when the second protrusion is located at the position of the locking mark, the clamping blocks tightly clamp the screw; when the second protrusion is located at the position of the unlocking mark, the clamping blocks can be separated from the screw; in this way, whether the screw is in a clamped state or a released state can be confirmed more conveniently, and mounting is more convenient.

Preferably, the support is approximately in an L shape, a mounting hole is formed in the end, close to the wall, of the support, and the support can be fixed to the wall through the mounting hole and a bolt.

Furthermore, the wall support assembly further comprises a bracket, and the bracket is fixedly connected to the other end of the screw through a lock nut. The bathroom device or other devices can be mounted conveniently through the bracket.

Furthermore, a screw head is arranged at the other end of the screw, an insert block and a clamp plate are mounted on the bracket, the screw penetrates through the insert block, the screw head is pressed on the insert block, the clamp plate is clamped on the front side of the screw head, a matching groove matched with a screwdriver is formed in the end face of the screw head, and a through hole allowing the screwdriver to penetrate through is formed in the clamp plate; the lock nut is provided with an opening and can be screwed on the screw through the opening. The bracket can be well protected through the insert block, and the clamp plate can prevent the screw and the bracket from moving relatively; as the matching groove matched with the screwdriver is formed in the end face of the screw head, the screw can be rotated conveniently through the screwdriver, the position of the bracket relative to the wall can be fine adjusted, and the bathroom device or other devices can be mounted more conveniently.

According to the invention, the clamping blocks can tightly clamp or release the screw by rotating the rotating sleeve, the screw is well supported after being clamped, and thus the bathroom device or other devices can be mounted on the wall conveniently. In addition, after the screw is released, the bathroom device or other devices can be dismounted from the wall conveniently, so that the bathroom device or other devices can be mounted and dismounted rapidly, labor investment can be reduced, and the mounting cost can be reduced.

### BRIEF DESCRIPTION OF THE SEVERAL VIEWS OF THE DRAWINGS

FIG. 1 is a perspective view of a common wall support assembly;
FIG. 2 is a top view of the support assembly, shown in FIG. 1, mounted on a wall;
FIG. 3 is a perspective view of the invention;
FIG. 4 is an exploded perspective view of the invention;
FIG. 5 is a perspective view of the invention under the condition that a support and clamping blocks are separated from a rotating sleeve;
FIG. 6 is a front view of the invention mounted on a wall;
FIG. 7 is a B-B section view of FIG. 6;
FIG. 8 is an A-A section view of FIG. 1 under the condition that the clamping blocks tightly clamp a screw;
FIG. 9 is an A-A section view of FIG. 1 under the condition that the clamping blocks are separated from the screw.

### DETAILED DESCRIPTION OF THE INVENTION

A further detailed description of the invention is given with accompanying drawings and specific embodiments as follows.

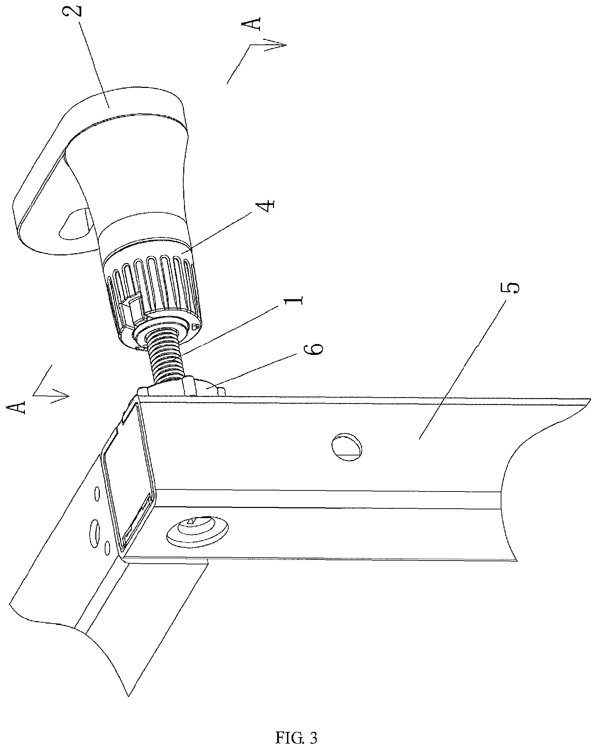

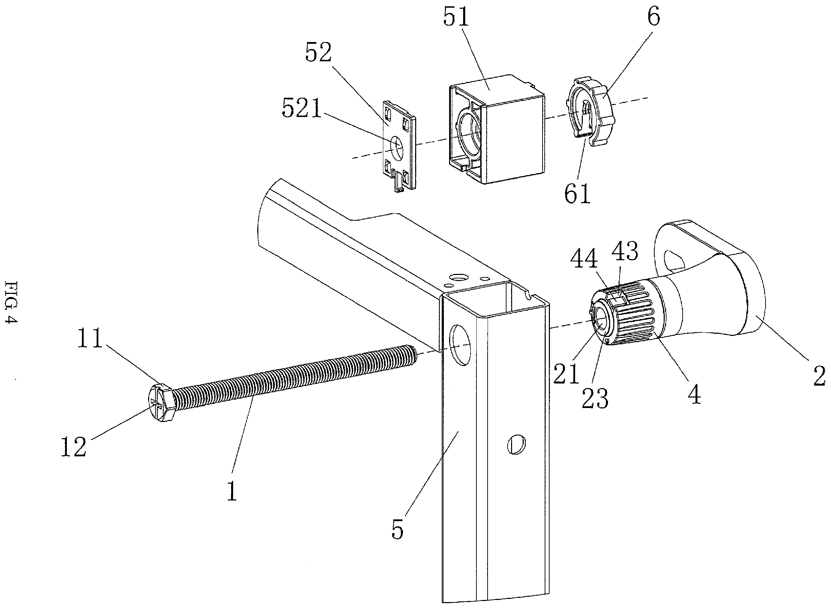

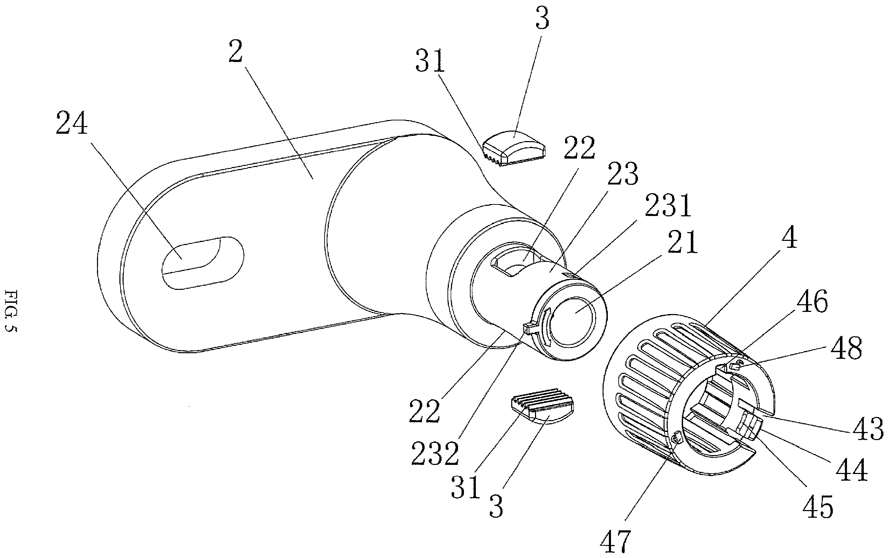

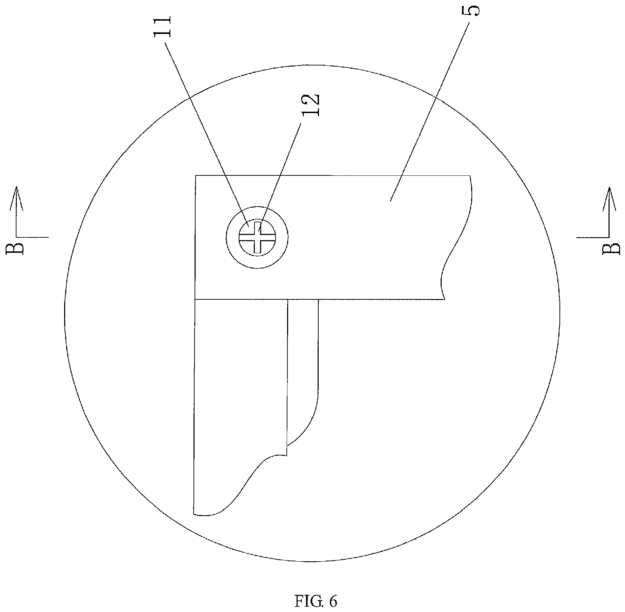

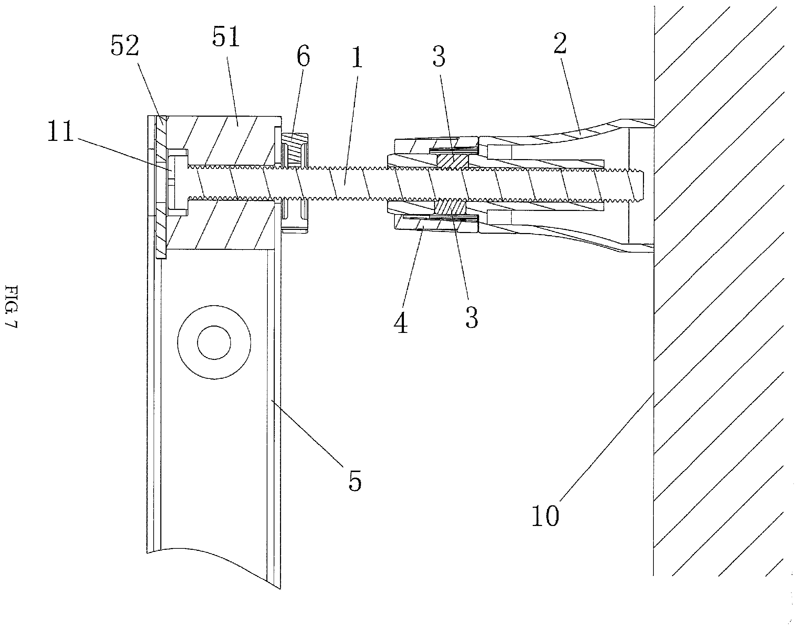

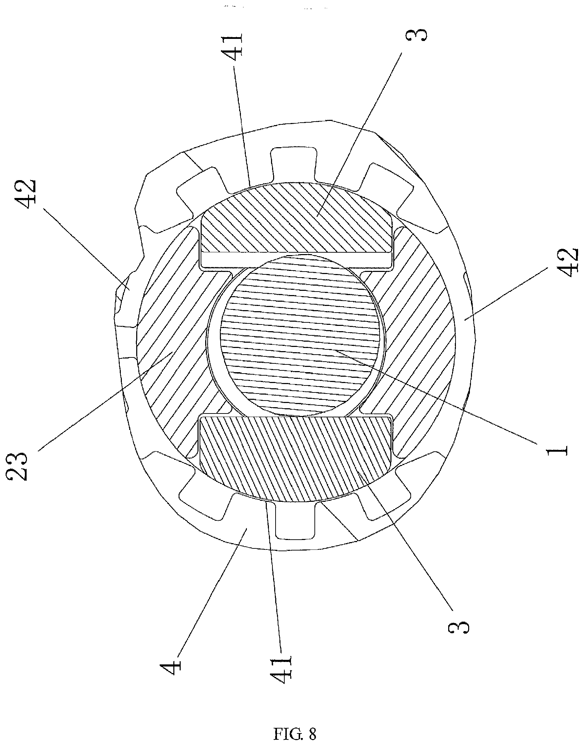

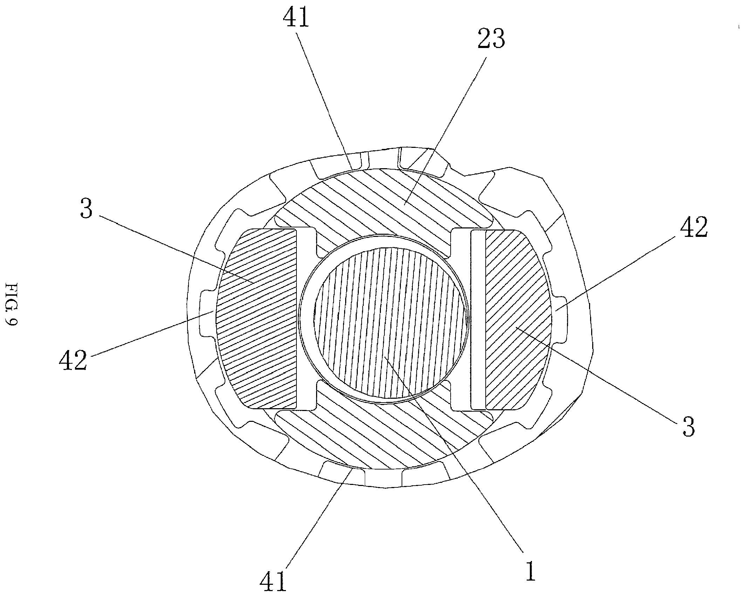

As is shown in FIGs. 3-9, a conveniently-mounted wall support assembly comprises a screw 1 and a support 2 fixedly connected to a wall 10, wherein a matching hole 21 allowing one end of the screw 1 to be inserted therein is formed in the support 2, the matching hole 21 is perpendicular to the wall 10 in the axial direction, two radial through holes 22 are symmetrically formed in the inner side face of the matching hole 21, and a clamping block 3 is mounted in each radial through hole 22; the support 2 is sleeved with a rotating sleeve 4, and two driving surfaces 41 and two receding grooves 42 are symmetrically arranged on the inner surface of the rotating sleeve 4; after one end of the screw 1 is inserted into the matching hole 21, the two clamping blocks 3 are driven by the two driving surfaces 41 respectively to move towards the screw 1 so as to tightly clamp the screw 1 when the rotating sleeve 4 is rotated to enable the two driving surfaces 41 to be matched with the two clamping blocks 3, and the two clamping blocks 3 can be separated from the screw 1 when the rotating sleeve 4 is rotated to enable the two receding grooves 42 to be matched with the two clamping blocks 3.

A plurality of thread matching grooves 31 matched with external threads of the screw 1 are formed in the side, close to the matching hole 21, of each clamping block 3, and the thread matching grooves 31 in the clamping blocks 3 are matched with the external threads of the screw 1 when the camping blocks 3 are driven by the driving surfaces 41 to move towards the screw 1.

A cylinder 23 is arranged on the support 2, the matching hole 21 is formed in the middle of the cylinder 23, the radial through holes 22 are formed in the cylinder 23, and the outer circumferential surface of the cylinder 23 is sleeved with the rotating sleeve 4.

A groove 231 is distributed in the outer circumferential surface of the cylinder 23 in the circumferential direction, a notch 43 is formed in the outer end of the rotating sleeve 4, a deformable plate 44 extends out from the bottom of the notch 43 in the axial direction of the rotating sleeve 4, a first protrusion 45 extends out from the inner side face of the plate 44 in the radial direction of the rotating sleeve 4, and the first protrusion 45 is matched with the groove 231.

A second protrusion 232 is arranged at the outer end of the cylinder 23, an axial through groove 46 is formed in the inner surface of the rotating sleeve 4, the rotating sleeve 4 can penetrate through the second protrusion 232 to be arranged on the outer circumferential surface of the cylinder 23 in a sleeving mode through the axial through groove 46, and when the rotating sleeve 4 is arranged on the outer circumferential surface of the cylinder 23 in the sleeving mode, the second protrusion 232 prevents the rotating sleeve 4 from being separated from the cylinder 23 except at the position of the axial through groove 46.

A locking mark 47 and an unlocking mark 48 are arranged on the outer end face of the rotating sleeve 4, and the unlocking mark 48 is close to the axial through groove 46; when the second protrusion 232 is located at the position of the locking mark 47, the two clamping blocks 3 tightly clamp the screw 1; when the second protrusion 232 is located at the position of the unlocking mark 48, the two clamping blocks 3 can be separated from the screw 1.

The support 2 is approximately in an L shape, a mounting hole 24 is formed in the end, close to the wall 10, of the support 2, and the support 2 can be fixed to the wall 10 through the mounting hole 24 and a bolt; along with rotation of the rotating sleeve 4, the driving surfaces 41 can also be designed to press the clamping blocks 3 gradually.

The wall support assembly in the embodiment further comprises a bracket 5, and the bracket 5 is fixedly connected to the other end of the screw 1 through a lock nut 6. The lock nut 6 is provided with an opening 61 and can be screwed on the screw 1 through the opening 61. In this way, the lock nut 6 can be screwed on the screw 1 extremely conveniently.

A head 11 is arranged at the other end of the screw 1, an insert block 51 and a clamp plate 52 are mounted on the bracket 5, the screw 1 penetrates through the insert block 51, the head 11 of the screw 1 is pressed on the insert block 51, the clamp plate 52 is clamped on the front side of the head 11 of the screw 1, a matching groove 12 matched with a screwdriver is formed in the end face of the head 11 of the screw 1, and a through hole 521 allowing the screwdriver to penetrate through is formed in the clamp plate 52.

When the wall support assembly in the embodiment is mounted, the insert block 51 is inlaid in the bracket 5 firstly, the screw 1 is made to penetrate through the insert block 51, and the head 11 of the screw 1 is pressed on the insert block 51; then the clamp plate 52 is mounted in the bracket 5 and clamped on the front side of the head 11 of the screw 1, and thus the bracket 5 and the screw 1 are prevented from moving relatively; afterwards, one end of the screw 1 is inserted into the matching hole 21 in the support 2, the distance between the bracket 5 and the wall 10 is adjusted at first, and then the rotating sleeve 4 is rotated to enable the two driving surfaces 41 to be matched with the two clamping blocks 3, so that the two clamping blocks 3 tightly clamp the screw 1; the support 2 is fixed to the wall 10 through the mounting hole 24, so that the bracket 5 is fixedly connected to the wall 10, accurate dimension positioning can be achieved through fine adjustment, and thus the bathroom device or other devices can be mounted on the bracket 5 conveniently.

If the device on the bracket needs to be dismounted, a user just needs to rotate the rotating sleeve 4 reversely to enable the two receding grooves 42 to be matched with the two clamping blocks 3 respectively, and then the two clamping blocks 3 can be separated from the screw 1; as the screw 1 is released, the bracket 5, the screw 1 and the bathroom device or other devices mounted on the bracket 5 can be dismounted from the wall 10 conveniently; the wall support assembly can be mounted and dismounted conveniently and rapidly.

The above embodiment is only one preferred embodiment of the invention, and equivalent changes made by those skilled in the field according to the claims are all within the protection scope of the invention.

## Claims

1. A conveniently-mounted wall support assembly, comprising a screw (1) and a support (2) fixedly connectable to a wall (10); **characterized in that** the conveniently-mounted wall support assembly further comprises clamping blocks (3) and a rotating sleeve (4), and a matching hole (21) allowing one end of the screw (1) to be inserted therein is formed in the support (2), radial through holes (22) are formed in the inner side face of the matching hole (21), and the clamping blocks (3) are mounted in the radial through holes (22); the support (2) is sleeved with the rotating sleeve (4), and driving surfaces (41) and receding grooves (42) are arranged on the inner surface of the rotating sleeve (4); after one end of the screw (1) is inserted into the matching hole (21), the clamping blocks (3) are driven by the driving surfaces (41) to move towards the screw (1) so as to tightly clamp the screw (1) when the rotating sleeve (4) is rotated to enable the driving surfaces (41) to be matched with the clamping blocks (3), and the clamping blocks (3) can be separated from the screw (1) when the rotating sleeve (4) is rotated to enable the receding grooves (42) to be matched with the clamping blocks (3).

2. The conveniently-mounted wall support assembly according to Claim 1, **characterized in that** the matching hole (21) can be perpendicular to the wall (10) in the axial direction, two radial through holes (22) are symmetrically formed in the inner side face of the matching hole (21), a clamping block (3) is mounted in each radial through hole (22), and two driving surfaces (41) and two receding grooves (42) are symmetrically arranged on the inner surface of the rotating sleeve (4).

3. The conveniently-mounted wall support assembly according to Claim 1, **characterized in that** a plurality of thread matching grooves (31) matched with external threads of the screw (1) are formed in the side close to the matching hole (21) of each clamping block (3), and the thread matching grooves (31) in the clamping blocks (3) are matched with the external threads of the screw (1) when the camping blocks (3) are driven by the driving surfaces (41) to move towards the screw (1).

4. The conveniently-mounted wall support assembly according to Claim 1, **characterized in that** a cylinder (23) is arranged on the support (2), the matching hole (21) is formed in the middle of the cylinder (23), the radial through holes (22) are formed in the cylinder (23), and the outer circumferential surface of the cylinder (23) is sleeved with the rotating sleeve (4).

5. The conveniently-mounted wall support assembly according to Claim 4, **characterized in that** a groove (231) is distributed in the outer circumferential surface of the cylinder (23) in the circumferential direction, a notch (43) is formed in the outer end of the rotating sleeve (4), a deformable plate (44) extends out from the bottom of the notch (43) in the axial direction of the rotating sleeve (4), a first protrusion (45) extends out from the inner side face of the plate (44) in the radial direction of the rotating sleeve (4), and the first protrusion (45) is matched with the groove (231).

6. The conveniently-mounted wall support assembly according to Claim 4, **characterized in that** a second protrusion (232) is arranged at the outer end of the cylinder (23), an axial through groove (46) is formed in the inner surface of the rotating sleeve (4), the rotating sleeve (4) can penetrate through the second protrusion (232) to be arranged on the outer circumferential surface of the cylinder (23) in a sleeving mode through the axial through groove (46), and when the rotating sleeve (4) is arranged on the outer circumferential surface of the cylinder (23) in the sleeving mode, the second protrusion (232) prevents the rotating sleeve (4) from being separated from the cylinder (23) except at the position of the axial through groove (46).

7. The conveniently-mounted wall support assembly according to Claim 6, **characterized in that** a locking mark (47) and an unlocking mark (48) are arranged on the outer end face of the rotating sleeve (4), and the unlocking mark (48) is close to the axial through groove (46); when the second protrusion (232) is located at the position of the locking mark (47), the clamping blocks (3) tightly clamp the screw (1); when the second protrusion (232) is located at the position of the unlocking mark (48), the clamping blocks (3) can be separated from the screw (1).

8. The conveniently-mounted wall support assembly according to Claim 1, **characterized in that** the support (2) is approximately in an L shape, a mounting hole (24) is formed in the end, close to the wall (10), of the support (2), and the support (2) can be fixed to the wall (10) through the mounting hole (24) and a bolt.

9. The conveniently-mounted wall support assembly according to any of Claims 1-8, **characterized by** further comprising a bracket (5), wherein the bracket (5) is fixedly connected to the other end of the screw (1) through a lock nut (6).

10. The conveniently-mounted wall support assembly according to Claim 9, **characterized in that** a screw head (11) is arranged at the other end of the screw (1), an insert block (51) and a clamp plate (52) are mounted on the bracket (5), the screw (1) penetrates through the insert block (51), the screw head (11) is pressed on the insert block (51), the clamp plate (52) is clamped on the front side of the screw head (11), a matching groove (12) that can match with a screwdriver is formed in the end face of the screw head (11), and a through hole (521) allowing the screwdriver to penetrate through is formed in the clamp plate (52); the lock nut (6) is provided with an opening (61) and can be screwed on the screw (1) through the opening (61).

## Patentansprüche

1. Eine praktisch befestigte Wandhalterungsanordnung, die eine Schraube (1) und einer Halterung (2), die fest mit einer Wand (10) verbindbar ist, aufweist; **dadurch gekennzeichnet, dass** die praktisch befestigte Wandhalterungsanordnung ferner Klemmblöcke (3) und eine Drehhülse (4) aufweist, und ein Passloch (21), welches einem Ende der Schraube (1) gestattet, darin eingesetzt zu werden, ist in der Halterung (2) gebildet, radiale Durchgangslöcher (22) sind in der inneren Seitenstirnseite des Passlochs (21) gebildet, und die Klemmblöcke (3) sind in den radialen Durchgangslöchern (22) befestigt; die Halterung (2) ist mit der Drehhülse (4) hülsenartig versehen, und Antriebsoberflächen (41) und Ausnehmungsnuten (42) sind auf der inneren Oberfläche der Drehhülse (4) angeordnet; nachdem ein Ende der Schraube (1) in das Passloch (21) eingesetzt ist, werden die Klemmblöcke (3) von den Antriebsoberflächen (41) angetrieben, um sich zu der Schraube (1) hin zu bewegen, um die Schraube (1) fest zu klemmen, wenn die Drehhülse (4) gedreht wird, um zu ermöglichen, dass die Antriebsoberflächen (41) mit den Klemmblöcken (3) gepasst sind, und die Klemmblöcke (3) können von der Schraube (1) getrennt werden, wenn die Drehhülse (4) gedreht wird, um zu ermöglichen, dass die Ausnehmungsnuten (42) mit den Klemmblöcken (3) gepasst sind.

2. Die praktisch befestigte Wandhalterungsanordnung nach Anspruch 1, **dadurch gekennzeichnet, dass** das Passloch (21) senkrecht zu der Wand (10) in der axialen Richtung sein kann, zwei radiale Durchgangslöcher (22) sind symmetrisch in der inneren Seitenstirnseite des Passlochs (21) gebildet, ein Klemmblock (3) ist in jedem radialen Durchgangsloch (22) befestigt, auf zwei Antriebsoberflächen (41) und zwei Ausnehmungsnuten (42) sind symmetrisch auf der inneren Oberfläche der Drehhülse (4) angeordnet.

3. Die praktisch befestigte Wandhalterungsanordnung nach Anspruch 1, **dadurch gekennzeichnet, dass** eine Vielzahl von Gewindepassnuten (31), die mit Außengewinden der Schraube (1) gepasst sind, in der Seite nahe bei dem Passloch (21) von jedem Klemmblock (3) gebildet sind, und die Gewindepassnuten (31) in den Klemmblöcken (3) sind mit dem Außengewinden der Schraube (1) gepasst, wenn die Klemmblöcke (3) durch die Antriebsoberflächen (41) angetrieben werden, um sich zu der Schraube (1) hin zu bewegen.

4. Die praktisch befestigte Wandhalterungsanordnung nach Anspruch 1, **dadurch gekennzeichnet, dass** ein Zylinder (23) auf der Halterung (2) angeordnet ist, das Passloch (21) ist in der Mitte des Zylinders (23) gebildet, die radialen Durchgangslöcher (22) sind in dem Zylinder (23) gebildet, und die äußere Umfangsoberfläche des Zylinders (23) ist mit der Drehhülse (4) hülsenartig versehen.

5. Die praktisch befestigte Wandhalterungsanordnung nach Anspruch 4, **dadurch gekennzeichnet, dass** eine Nut (231) in der äußeren Umfangsoberfläche des Zylinders (23) in der Umfangsrichtung verteilt ist, eine Kerbe (43) ist in dem äußeren Ende der Drehhülse (4) gebildet, eine deformierbare Platte (44) erstreckt sich von dem Boden der Kerbe (43) in der axialen Richtung der Drehhülse (4) heraus, ein erster Vorsprung (45) erstreckt sich von der inneren Seitenstirnseite der Platte (44) in der radialen Richtung der Drehhülse (4) heraus, und der erste Vorsprung (45) ist mit der Nut (231) gepasst.

6. Die praktisch befestigte Wandhalterungsanordnung nach Anspruch 4, **dadurch gekennzeichnet, dass** ein zweiter Vorsprung (232) an dem äußeren Ende des Zylinders (23) angeordnet ist, eine axiale Durchgangsnut (46) ist in der inneren Oberfläche der Drehhülse (4) gebildet, die Drehhülse (4) kann durch den zweiten Vorsprung (232) durchdringen, um an der äußeren Umfangsoberfläche des Zylinders (23) in einem hülsenartigen Modus durch die axialen Durchgangsnut (46) angeordnet zu sein, und wenn die Drehhülse (4) an der Außenumfangsoberfläche des Zylinders (23) in dem hülsenartigen Modus angeordnet ist, verhindert der zweite Vorsprung (232), dass die Drehhülse (4) von dem Zylinder (23) getrennt wird, außer an der Position der axialen Durchgangsnut (46).

7. Die praktisch befestigte Wandhalterungsanordnung nach Anspruch 6, **dadurch gekennzeichnet, dass** eine Verriegelungsmarkierung (47) und eine Entriegelungsmarkierung (48) auf der äußeren Endstirnseite der Drehhülse (4) angeordnet sind, und die Entriegelungsmarkierung (48) ist nahe bei der axialen Durchgangsnut (46); wenn sich der zweite Vorsprung (232) an der Position der Verriegelungsmarkierung (47) befindet, klemmen die Klemmblöcke (3) die Schraube (1) fest; wenn sich der zweite Vorsprung (232) an der Position der Entriegelungsmarkierung (48) befindet, können die Klemmblöcke (3) von der Schraube (1) getrennt werden.

8. Die praktisch befestigte Wandhalterungsanordnung nach Anspruch 1, **dadurch gekennzeichnet, dass** die Halterung (2) ungefähr L-förmig ist, ein Befestigungsloch (24) ist in dem Ende, nahe bei der Wand (10), der Halterung (2) gebildet, und die Halterung (2) kann durch das Befestigungsloch (24) und einen Bolzen an der Wand (10) befestigt werden.

9. Die praktisch befestigte Wandhalterungsanordnung nach einem der Ansprüche 1-8, **dadurch gekennzeichnet, dass** diese ferner eine Klammer (5) aufweist, wobei die Klammer (5) fest mit dem anderen Ende der Schraube (1) durch eine Verriegelungsmutter (6) verbunden ist.

10. Die praktisch befestigte Wandhalterungsanordnung nach Anspruch 9, **dadurch gekennzeichnet, dass** ein Schraubenkopf (11) an dem anderen Ende der Schraube (1) angeordnet ist, ein Einsetzblock (51) und eine Klemmplatte (52) sind an der Klammer (5) befestigt, die Schraube (1) dringt durch den Einsetzblock (51) durch, der Schraubenkopf (11) wird auf den Einsetzblock (51) gedrückt, die Klemmplatte (52) wird auf die Vorderseite des Schraubenkopfes (11) geklemmt, eine Passnut (12), die mit einem Schraubendreher passen kann, ist in der Endstirnseite des Schraubenkopfes (11) gebildet, und ein Durchgangsloch (521), das es dem Schraubendreher durchzudringen gestattet, ist in der Klemmplatte (52) gebildet; die Verriegelungsmutter (6) ist mit einer Öffnung (61) versehen und kann durch die Öffnung (61) auf die Schraube (1) aufgeschraubt werden.

## Revendications

1. Assemblage de support mural à montage pratique, comprenant une vis (1) et un support (2) apte à être relié fixement à un mur (10) ; **caractérisé en ce que** l'assemblage de support mural à montage pratique comprend en outre des blocs de serrage (3) et un manchon rotatif (4), et un trou correspondant (21) permettant à une extrémité de la vis (1) d'être insérée dans celui-ci est formé dans le support, des trous radiaux traversants (22) sont formés dans la face intérieure latérale du trou correspondant (21), et les blocs de serrage (3) sont montés dans les trous radiaux traversants (22) ; le support (2) est recouvert avec le manchon rotatif (4), et des surfaces d'entraînement (41) et des rainures en retrait (42) sont disposées sur la surface intérieure du manchon rotatif (4) ; après qu'une extrémité de la vis (1) est insérée dans le trou correspondant (21), les blocs de serrage (3) sont entraînés par les surfaces d'entraînement (41) pour se déplacer vers la vis (1) de manière à serrer à fond la vis (1) quand le manchon rotatif (4) est pivoté pour permettre aux surfaces d'entraînement (41) d'être mises en correspondance des blocs de serrage (3), et les blocs de serrage (3) peuvent être séparés de la vis (1) quand le manchon rotatif (4) est pivoté pour permettre aux rainures en retrait (42) d'être mises en correspondance des blocs de serrage (3).

2. Assemblage de support mural à montage pratique selon la revendication 1, **caractérisé en ce que** le trou correspondant (21) peut être perpendiculaire au mur (10) dans la direction axiale, deux trous radiaux traversants (22) sont formés symétriquement dans la face intérieure latérale du trou correspondant (21), un bloc de serrage (3) est monté dans chaque trou radial traversant (22), et deux surfaces d'entraînement (41) et deux rainures en retrait (42) sont disposées symétriquement sur la surface intérieure du manchon rotatif (4).

3. Assemblage de support mural à montage pratique selon la revendication 1, **caractérisé en ce qu'**une pluralité de rainures en correspondance de filetage (31) correspondant à des filetages externes de la vis (1) sont formées dans le côté proche du trou correspondant (21) de chaque bloc de serrage (3), et les rainures en correspondance de filetage (31) dans les blocs de serrage (3) sont mises en correspondance des filetages externes de la vis (1) quand les blocs de serrage (3) sont entraînés par les surfaces d'entraînement (41) pour se déplacer vers la vis (1).

4. Assemblage de support mural à montage pratique selon la revendication 1, **caractérisé en ce qu'**un cylindre (23) est disposé sur le support (2), le trou correspondant (21) est formé au milieu du cylindre (23), les trous radiaux traversants (22) sont formés dans le cylindre (23), et la surface extérieure circonférentielle du cylindre (23) est recouverte avec le manchon rotatif (4).

5. Assemblage de support mural à montage pratique selon la revendication 4, **caractérisé en ce qu'**une rainure (231) est répartie dans la surface extérieure circonférentielle du cylindre (23) dans la direction circonférentielle, une encoche (43) est formée dans l'extrémité extérieure du manchon rotatif (4), une plaque déformable (44) s'étend à partir du fond de l'encoche (43) dans la direction axiale du manchon rotatif (4), une première saillie (45) s'étend à partir de la face latérale intérieure de la plaque (44) dans la direction radiale du manchon rotatif (4), et la première saillie (45) est mise en correspondance de la rainure (231).

6. Assemblage de support mural à montage pratique selon la revendication 4, **caractérisé en ce qu'**une deuxième saillie (232) est disposée à l'extrémité extérieure du cylindre (23), une rainure axiale traversante (46) est formée dans la surface intérieure du manchon rotatif (4), le manchon rotatif (4) peut pénétrer à travers la deuxième saillie (232) pour être disposé sur la surface extérieure circonférentielle du cylindre (23) dans un mode recouvrant à travers la rainure traversante axiale (46), et quand le manchon rotatif (4) est disposé sur la surface extérieure circonférentielle du cylindre (23) dans un mode recouvrant, la deuxième saillie (232) empêche le manchon rotatif (4) d'être séparé du cylindre (23) sauf à la position de la rainure axiale traversante (46).

7. Assemblage de support mural à montage pratique selon la revendication 6, **caractérisé en ce qu'**un repère de verrouillage (47) et un repère de déverrouillage (48) sont disposés sur la face extérieure d'extrémité du manchon rotatif (4), et le repère de déverrouillage (48) est proche de la rainure axiale traversante (46) ; quand la deuxième saillie (232) se trouve à la position du repère de verrouillage (47), les blocs de serrage (3) serrent la vis (1) à fond ; quand la deuxième saillie (232) se trouve à la position du repère de déverrouillage (48), les blocs de serrage (3) peuvent être séparés de la vis (1).

8. Assemblage de support mural à montage pratique selon la revendication 1, **caractérisé en ce que** le support (2) a approximativement une forme en L, un trou de montage (24) est formé dans l'extrémité, proche du mur (10), du support (2), et le support (2) peut être fixé au mur (10) par l'intermédiaire du trou de montage (24) et un boulon.

9. Assemblage de support mural à montage pratique selon l'une quelconque des revendications 1-8, **caractérisé en ce qu'**il comprend en outre une applique (5), dans lequel l'applique (5) est reliée fixement à l'autre extrémité de la vis (1) par l'intermédiaire d'un écrou de verrouillage (6).

10. Assemblage de support mural à montage pratique selon la revendication 9, **caractérisé en ce qu'**une tête de vis (11) est disposée à l'autre extrémité de la vis (1), un bloc d'insertion (51) et une plaque de serrage (52) sont montés sur l'applique (5), la vis (1) pénètre à travers le bloc d'insertion (51), la tête de vis (11) est pressée sur le bloc d'insertion (51), la plaque de serrage (52) est serrée sur le côté avant de la tête de vis (11), une rainure correspondante (12) qui peut correspondre à un tournevis est formée dans la face d'extrémité de la tête de vis (11), et un trou traversant (521) permettant au tournevis de pénétrer au travers est formé dans la plaque de serrage (52) ; l'écrou de verrouillage (6) est pourvu d'une ouverture (61) et peut être vissé sur la vis (1) à travers l'ouverture (61).
